# EUROPEAN PATENT SPECIFICATION

(11) **EP 3 517 074 B1**
(45) Date of publication and mention of the grant of the patent: **19.02.2020**
(21) Application number: 18189490.8
(22) Date of filing: 17.08.2018
(51) Int. Cl.: A61C 13/01, A61C 13/00, A61C 13/20

(54) **METHOD FOR FABRICATING DENTURE BASE AND DENTURE BASE FABRICATING KIT**
VERFAHREN ZUR HERSTELLUNG EINER ZAHNPROTHESENBASIS UND ZAHNPROTHESENBASISHERSTELLUNG KIT
PROCÉDÉ DE FABRICATION DE BASE POUR PROTHÈSE DENTAIRE ET KIT DE FABRICATION DE BASE POUR PROTHÈSE DENTAIRE

(30) Priority: 30.01.2018 JP 2018013402
(43) Date of publication of application: 31.07.2019
(73) Proprietor: DGSHAPE Corporation, Hamamatsu-shi, Shizuoka 431-2103 (JP)
(72) Inventor: SAITO, Koji, Hamamatsu-shi, Shizuoka 431-2103 (JP); ISOBE, Sachino, Hamamatsu-shi, Shizuoka 431-2103 (JP)
(74) Representative: Grünecker Patent- und Rechtsanwälte PartG mbB

(56) References cited:
- WO-A1-2009/020156
- WO-A1-2016/083296
- JP-A- 2017 070 518

## Description

### BACKGROUND OF THE INVENTION

### Field of the Invention

The present invention relates to a method for fabricating a denture base and a denture base fabricating kit.

### Description of the Related Art

Denture bases have been manufactured to date by cutting a cutting target such as a dental ceramic material or a dental resin material into a desired shape. Manufacturing of denture bases have been manually performed by dental technicians, or by a cutting machine based on data designed with introduction of a computer-aided design (CAD) and computer-aided manufacturing (CAM)
technique. Document JP2017070518A discloses a method of designing and fabricating a denture base.

Here, in the case of manually fabricating a denture base by a dental technician, a dental resin material to be used is relatively inexpensive, but a heavy burden is imposed on the dental technician because of manual work. On the other hand, in the case where a denture base is fabricated with a cutting machine, a dental resin material to be used is relatively expensive. In the case of using a disc-shape material commercially available as a dental resin material, the size of the material is fixed, and thus, it is necessary to use a material larger than a denture base to be fabricated. Accordingly, the amount of redundant material generated and discarded after cutting tends to increase. In addition, since the disc-shaped material is cut, the time necessary for cutting tends to increase, and thus, processing of an undercut portion such as a front portion is sometimes difficult.

It is therefore an object of the present invention to provide a fabricating method that can fabricate a dental base with a low material cost in a reduced processing time while reducing a workload on a dental technician.

### SUMMARY OF THE INVENTION

A fabricating method according to the present invention is a method for fabricating a denture base. The fabricating method includes: a preparation step of preparing a cutting target mold including a bottom wall, a first side wall, a second side wall, a third side wall, a fourth side wall, an opening facing the bottom wall, and molding space surrounded by the bottom wall, the first side wall, the second side wall, the third side wall, and the fourth side wall, the first side wall and the second side wall extending upward from the bottom wall and being opposed to each other, the third side wall and the fourth side wall extending upward from the bottom wall, being opposed to each other, and being respectively connected to the first side wall and the second side wall; an attachment step of attaching a rod-shaped first rod member to a portion of the first side wall defining the molding space in such a manner that an axis of the first rod member extends from the third side wall toward the fourth side wall and the first rod member covers a portion of the opening, and attaching a rod-shaped second rod member to a portion of the second side wall defining the molding space in such a manner that an axis of the second rod member extends from the third side wall toward the fourth side wall and the second rod member covers a portion of the opening; an injection step of injecting a denture base material into the molding space; an arrangement step of disposing a plate member in the cutting target mold in such a manner that the plate member is located above the first rod member and the second rod member and covers a portion of the opening; a molding step of polymerizing the denture base material and molding a cutting target including the polymerized denture base material, the first rod member, and the second rod member; a detachment step of detaching the cutting target from the cutting target mold; a first fabrication step of cutting a portion of the polymerized the denture base material in the cutting target with a cutting machine and fabricating a rod member-including denture base including the first rod member and the second rod member; and a second fabrication step of removing the first rod member and the second rod member from the rod member-including denture base and fabricating a denture base.

In the fabrication method according to the present invention, the denture base material injected into the molding space is polymerized with the first rod member and the second rod member attached to the cutting target mold. Thus, warpage of the denture base material can be suppressed during the polymerization of the denture base material so that the cutting target can be molded with high quality. In addition, since the polymerized denture base material in the cutting target is cut with the cutting machine, and thus, a workload on the dental technician can be reduced. The polymerized denture base material has a shape along the molding space of the cutting target mold. Thus, the use of the cutting target mold having the molding space in conformity with the denture base to be formed can reduce a redundant material generated and discarded after cutting, as compared to the case of using a commercially available disc-shaped material. In addition, since a relatively small portion is cut with the cutting machine, the time necessary for cutting can be reduced, and furthermore, an undercut portion such as an anterior tooth portion can be easily processed. Furthermore, the denture base material to be polymerized is more reasonable than a commercially available disc-shaped material, and thus, costs for a material for the denture base can be reduced.

The present invention can provide a fabricating method that can fabricate a dental base with a low material cost in a reduced processing time while reducing a workload on a dental technician.

### BRIEF DESCRIPTION OF THE DRAWINGS

FIG. 1 is a perspective view illustrating a denture according to one embodiment.
FIG. 2 is a plan view illustrating a denture base according to one embodiment.
FIG. 3 is a flowchart depicting a procedure of fabricating the denture base according to one embodiment.
FIG. 4 is a plan view illustrating a cutting target mold according to one embodiment.
FIG. 5 is a plan view illustrating a first rod member according to one embodiment.
FIG. 6 is a plan view illustrating a second rod member according to one embodiment.
FIG. 7 is a plan view illustrating a state where the first rod member and the second rod member are attached to the cutting target mold according to one embodiment.
FIG. 8 is a plan view illustrating a state where a plate member is placed in the cutting target mold according to one embodiment.
FIG. 9 is a plan view illustrating a cutting target according to one embodiment.
FIG. 10 is a plan view illustrating a rod member-including denture base according to one embodiment.
FIG. 11 is a plan view illustrating a state where the cutting target is attached to an adaptor according to one embodiment.
FIG. 12 is a plan view of a body of the adaptor according to one embodiment.
FIG. 13 is a plan view illustrating a state where the cutting target is held by the body according to one embodiment.
FIG. 14 is a plan view illustrating a holding plate of the adaptor according to one embodiment.
FIG. 15 is a perspective view of a cutting machine according to one embodiment.
FIG. 16 is a front view of the cutting machine according to one embodiment and illustrates a state where a cover is opened.
FIG. 17 is a perspective view of a tool magazine according to one embodiment.
FIG. 18 is a perspective view of a rotation supporting member and a clamp according to one embodiment.
FIG. 19 is a block diagram of a cutting machine according to one embodiment.
FIG. 20 is a plan view illustrating a cutting target mold according to another embodiment.

### DETAILED DESCRIPTION OF THE PREFERRED EMBODIMENTS

A method for fabricating a denture base according to one embodiment of the present invention will be described with reference to the drawings. The preferred embodiment described here is, of course, not intended to particularly limit the present invention. Members and parts having the same functions are denoted by the same reference numerals, and description for the same members and parts will not be repeated or will be simplified as appropriate.

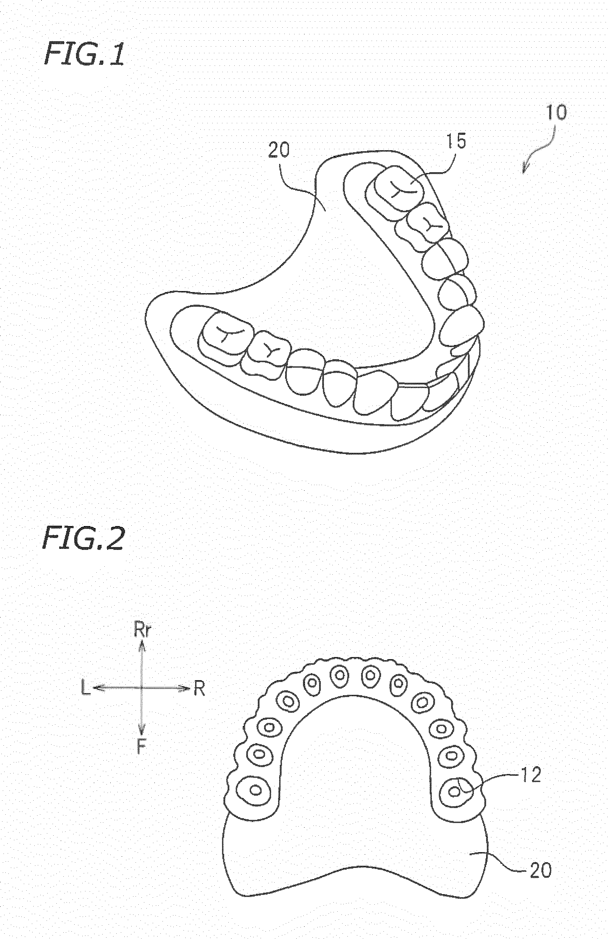

FIG. 1 is a perspective view illustrating a denture 10 according to this embodiment. The denture 10 includes a denture base 20 fabricated according to a fabrication method according to this embodiment (see also FIG. 2) and artificial teeth 15 arranged on the denture base 20. The artificial teeth 15 are fixed to the denture base 20 by an adhesive, for example. The artificial teeth 15 may be made of a material such as a polymethyl methacrylate resin (PMMA), zirconia, glass ceramics, glass fibers, a polyether ether ketone resin (PEEK), and a hybrid resin. The denture base 20 is made of a denture base material described later.

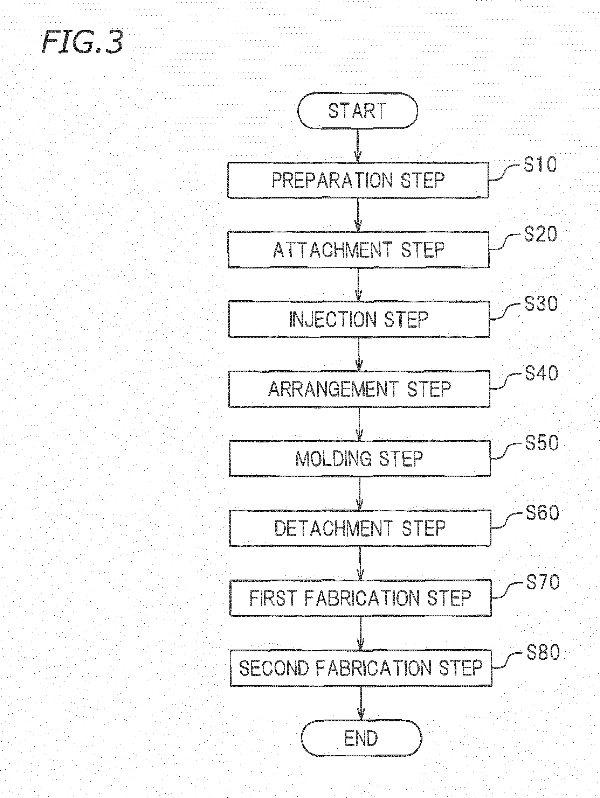

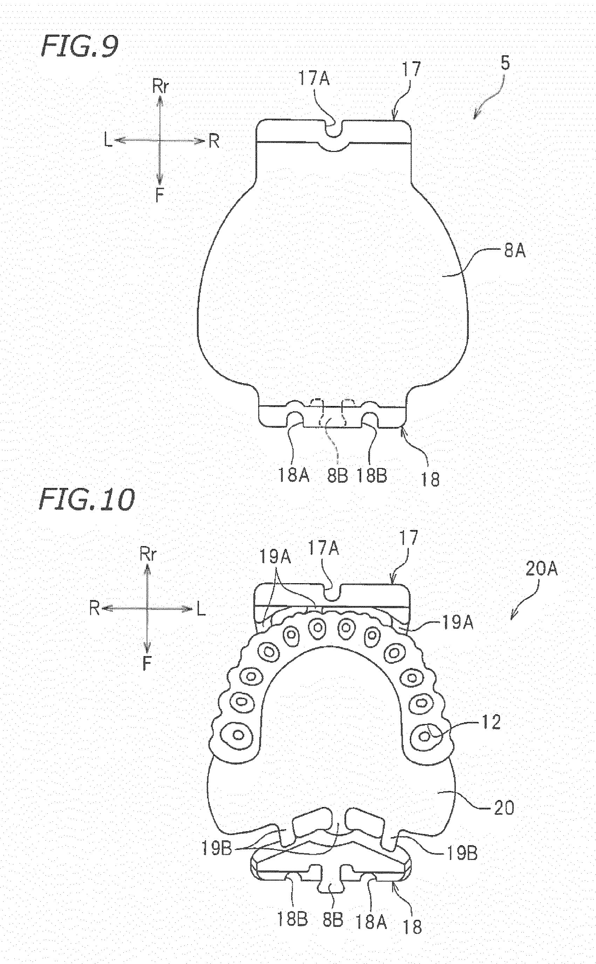

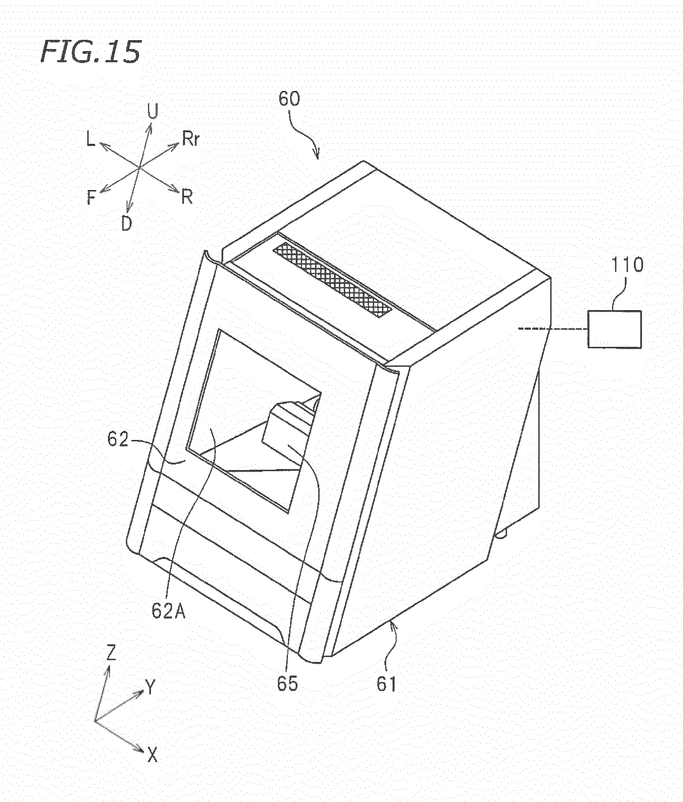

FIG. 3 is a flowchart depicting a procedure of fabricating the denture base 20 according to this embodiment. As illustrated in FIG. 3, a method for fabricating the denture base 20 (hereinafter referred to as a denture base fabricating method) according to this embodiment is a method for fabricating the denture base 20 using a denture base fabricating kit and a cutting machine 60 (see FIG. 15). Specifically, the denture base fabricating method is a method for fabricating the denture base 20 by cutting a cutting target 5 (see FIG. 9) molded by using a denture base fabricating kit into a desired shape with the cutting machine 60. The denture base fabricating method includes preparation step S10, attachment step S20, injection step S30, arrangement step S40, molding step S50, detachment step S60, first fabrication step S70, and second fabrication step S80. The steps will be described in detail below.

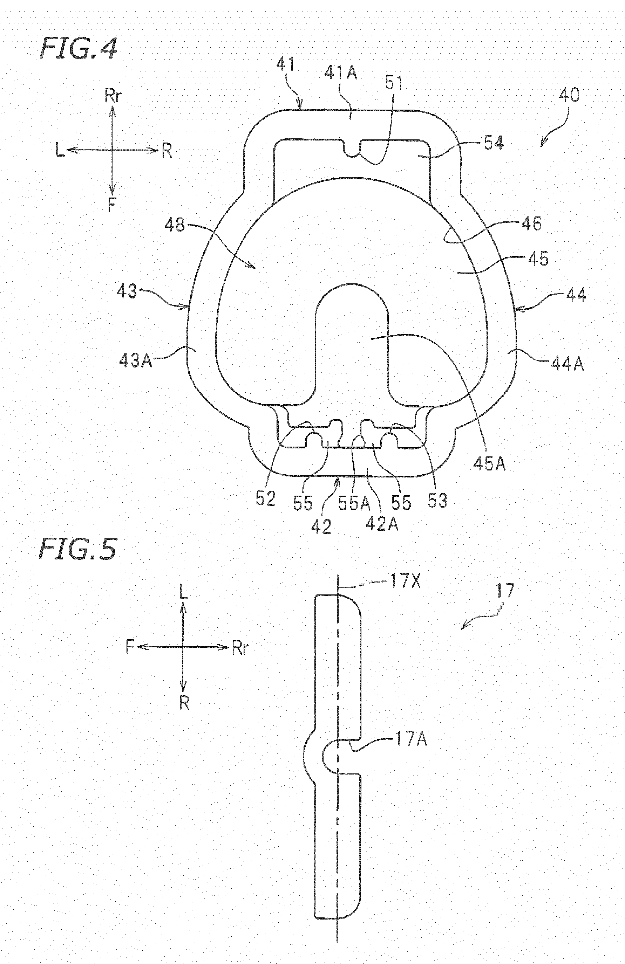

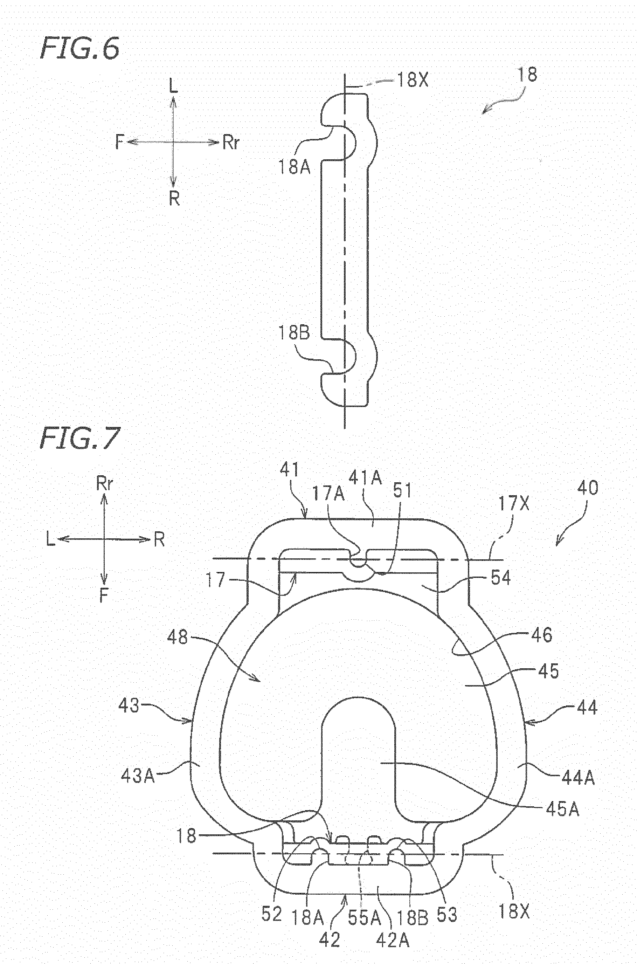

First, in preparation step S10, a cutting target mold 40 is prepared. FIG. 4 is a plan view of the cutting target mold 40. The cutting target mold 40 is a mold for molding a cutting target 5 by injecting a denture base material (also referred to as a denture base resin component) into molding space 48 with a first rod member 17 (see FIG. 5) and a second rod member 18 (see FIG. 6) described later being attached to the cutting target mold 40. The cutting target mold 40 is made of a material having heat resistance and releasability. The cutting target mold 40 is made of, for example, a silicone resin. The cutting target mold 40 according to this embodiment is used for fabricating the denture base 20 on the upper jaw. The cutting target mold 40 can be included in a denture base fabricating kit. Characters F, Rr, L, R, U, D in the drawings represent front, rear, left, right, up, and down, respectively. It should be noted that these directions are defined simply for convenience of description, and do not limit the invention and the embodiment.

As illustrated in FIG. 4, the cutting target mold 40 includes a bottom wall 45, a first side wall 41, a second side wall 42, a third side wall 43, and a fourth side wall 44. The bottom wall 45 includes a ridge 45A extending upward from the bottom wall 45. The height of the ridge 45A from the bottom wall 45 is lower than the heights of the first side wall 41 through the fourth side wall 44 from the bottom wall 45. The first side wall 41 extends upward from a rear portion of the bottom wall 45. The second side wall 42 extends upward from a front portion of the bottom wall 45. The first side wall 41 and the second side wall 42 face each other. The third side wall 43 extends upward from a left portion of the bottom wall 45. The third side wall 43 connects the left end of the first side wall 41 and the left end of the second side wall 42 to each other. The third side wall 43 is curved to the direction away from the fourth side wall 44. The fourth side wall 44 extends upward from a right portion of the bottom wall 45. The fourth side wall 44 connects the right end of the first side wall 41 and the right end of the second side wall 42 to each other. The fourth side wall 44 is curved to the direction away from the third side wall 43. The third side wall 43 and the fourth side wall 44 face each other. An upper surface 41A of the first side wall 41, an upper surface 42A of the second side wall 42, an upper surface 43A of the third side wall 43, and an upper surface 44A of the fourth side wall 44 are flush with each other. That is, the heights of the upper surfaces 41A through 44A from the bottom wall 45 are the same.

As illustrated in FIG. 4, the cutting target mold 40 includes an opening 46 and molding space 48. The opening 46 is formed at a position facing the bottom wall 45. That is, the cutting target mold 40 is open at the top. The molding space 48 is space surrounded by the bottom wall 45, the first side wall 41, the second side wall 42, the third side wall 43, and the fourth side wall 44. A denture base material described later is injected into the molding space 48.

As illustrated in FIG. 4, the cutting target mold 40 includes a first projection 51, a second projection 52, and a third projection 53. The first projection 51 is formed on the first side wall 41. The first projection 51 projects toward the second side wall 42. The first projection 51 extends in the top-bottom direction. The first projection 51 is formed substantially at the center of the first side wall 41. The second projection 52 and the third projection 53 are formed on the second side wall 42. The second projection 52 and the third projection 53 project toward the first side wall 41. The second projection 52 and the third projection 53 extend in the top-bottom direction. The second projection 52 is formed at the left of the third projection 53. The second projection 52 is located at the left of the first projection 51. The third projection 53 is located at the right of the first projection 51.

As illustrated in FIG. 4, the cutting target mold 40 includes a first step 54 and a second step 55. The first step 54 is formed on the first side wall 41. The first step 54 defines the molding space 48. The first step 54 is located below the upper surface 41A of the first side wall 41. The first step 54 is located above the bottom wall 45. The first step 54 is located above the ridge 45A. A first rod member 17 (see FIG. 5) described later is disposed on the first step 54. The second step 55 is formed on the second side wall 42. The second step 55 defines the molding space 48. The second step 55 is located below the upper surface 42A of the second side wall 42. The second step 55 is located above the bottom wall 45. The second step 55 is located above the ridge 45A. The height of the second step 55 from the bottom wall 45 is the same as the height of the first step 54 from the bottom wall 45. A second rod member 18 (see FIG. 6) described later is disposed on the second step 55. The second step 55 includes a groove 55A. The groove 55A is continuous to the molding space 48.

Next, in attachment step S20, the first rod member 17 and the second rod member 18 are attached to the cutting target mold 40. As illustrated in FIG. 5, the first rod member 17 has a rod shape. The first rod member 17 includes a first recess 17A that is engaged with the first projection 51 (see FIG. 4) formed on the first side wall 41. The first recess 17A is formed across the entire first rod member 17 in the top-bottom direction. The first recess 17A is formed substantially at the center of the first rod member 17 in the left-right direction. As illustrated in FIG. 6, the second rod member 18 has a rod shape. The second rod member 18 includes a second recess 18A that is engaged with the second projection 52 (see FIG. 4) formed on the second side wall 42 and a third recess 18B that is engaged with the third projection 53 (see FIG. 4) formed on the second side wall 42. The second recess 18A and the third recess 18B are formed across the entire second rod member 18 in the top-bottom direction. The second recess 18A is formed in a left portion of the second rod member 18. The third recess 18B is formed in a right portion of the second rod member 18. The first rod member 17 and the second rod member 18 are made of a resin material such as PMMA. Each of the first rod member 17 and the second rod member 18 may be made of a metal material. The length of the first rod member 17 in left-right direction and the length of the second rod member 18 in the left-right direction are the same, but may be different from each other. The first rod member 17 and the second rod member 18 can be included in the denture base fabricating kit.

As illustrated in FIG. 7, the first rod member 17 is attached to the first step 54 of the first side wall 41 in such a manner that an axis 17X of the first rod member 17 extends from the third side wall 43 toward the fourth side wall 44. The first rod member 17 is attached to the first projection 51 of the first side wall 41. The first rod member 17 covers a portion of the opening 46. When the first rod member 17 is attached to the cutting target mold 40, for example, the upper surface of the first rod member 17 is flush with the upper surface 41A of the first side wall 41. The first rod member 17 is disposed in a portion of the molding space 48. The second rod member 18 is attached to the second step 55 of the second side wall 42 in such a manner that an axis 18X of the second rod member 18 extends from the third side wall 43 toward the fourth side wall 44. The second rod member 18 is attached to the second projection 52 and the third projection 53 of the second side wall 42. The second rod member 18 covers a portion of the opening 46. When the second rod member 18 is attached to the cutting target mold 40, for example, the upper surface of the second rod member 18 is flush with the upper surface 42A of the second side wall 42. The second rod member 18 is disposed in a portion of the molding space 48.

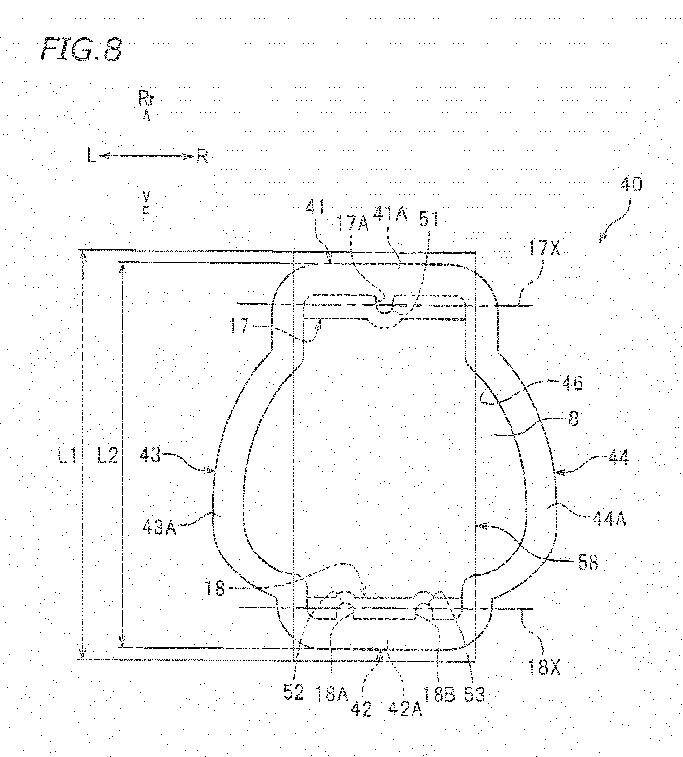

Thereafter, in injection step S30, a denture base material 8 (see FIG. 8) is injected into molding space 48 of the cutting target mold 40. As the denture base material 8, a known material conventionally used for molding a denture base can be used as appropriate. Examples of the denture base material include a denture base resin (e.g., an acrylic resin). Examples of the denture base resin include an autopolymer resin that is polymerized at room temperature and a heat-curing resin that is polymerized by heating. The amount of the denture base material 8 injected into the molding space 48 is not limited to a specific amount. For example, the amount of the denture base material 8 injected into the molding space 48 is such an amount that the injected denture base material 8 is located slightly above the upper surfaces 41A of the first side wall 41 through the upper surfaces 44A of the fourth side wall 44. The denture base material 8 is not disposed on any of the first rod member 17 and the second rod member 18.

After the injection of the denture base material 8 into the molding space 48 of the cutting target mold 40, the process is suspended for a predetermined time. The predetermined time here is a time necessary for the surface of the denture base material in the molding space 48 to be partially cured. The predetermined time is a time that has elapsed from the end of the injection of the denture base material 8 into the molding space 48. The predetermined time is a time appropriately set depending on the type of the denture base material 8, and is, for example, about 10 to 60 minutes.

Subsequently, in arrangement step S40, the plate member 58 is disposed on the cutting target mold 40. More specifically, as illustrated in FIG. 8, the plate member 58 is disposed above the first rod member 17 and the second rod member 18. The plate member 58 overlaps the first rod member 17 and the second rod member 18 in plan view. The plate member 58 covers a portion of the opening 46. That is, in the state where the plate member 58 is disposed on the cutting target mold 40, a portion of the denture base material 8 is exposed to the outside. Accordingly, in molding step S50 described later, possible bubbles generated during polymerization of the denture base material 8 can be ejected to the outside of the cutting target mold 40. The plate member 58 is formed to have a size enough to cover the first rod member 17 and the second rod member 18. A length L1 of the plate member 58 in the front-rear direction is longer than a length L2 of the cutting target mold 40 in the front-rear direction, for example. The plate member 58 has a function of pressing the first rod member 17 and the second rod member 18 against the cutting target mold 40. This structure can suppress movement of the first rod member 17 and the second rod member 18 relative to the cutting target mold 40. The plate member 58 is made of, for example, a silicone resin. A weight may be additionally placed on the plate member 58. This structure can further ensure pressing of the first rod member 17 and the second rod member 18 against the cutting target mold 40 so that movement of the first rod member 17 and the second rod member 18 can be further suppressed. The plate member 58 can be included in the denture base fabricating kit.

Thereafter, in molding step S50, the denture base material 8 is polymerized, and the cutting target 5 (see FIG. 9) including a polymerized denture base material 8A (see FIG. 9), the first rod member 17, and the second rod member 18 is molded. The polymerization of the denture base material 8 is performed with, for example, a polymerizer of a heating and pressurizing type. Specifically, the denture base material 8 is injected into the molding space 48 and the cutting target mold 40 provided with the plate member 58 is placed in the polymerizer. In this state, water is injected into the polymerizer and then pressurizing polymerization is performed. The amount of water injected into the polymerizer is, for example, such an amount that the water level is below the upper surface of the cutting target mold 40 (e.g., below the upper surface 41A of the first side wall 41). The amount of water injected into the polymerizer is, for example, such an amount that the water level is above the first step 54 and the second step 55. Molding step S50 is performed in such a manner that water does not enter the denture base material 8 injected into the molding space 48. The polymerization of the denture base material 8 is completed in, for example, about 30 minutes to 60 minutes. The polymerization of the denture base material 8 firmly bonds the denture base material 8, the first rod member 17, and the second rod member 18. In this manner, the cutting target 5 including the polymerized denture base material 8A (see FIG. 9), the first rod member 17, and the second rod member 18 is molded.

Then, in detachment step S60, the cutting target 5 is detached from the molding space 48 of the cutting target mold 40. Since the cutting target mold 40 includes releasability to the polymerized denture base material 8A, the cutting target 5 can be easily removed from the cutting target mold 40. As illustrated in FIG. 9, the cutting target 5 includes the polymerized denture base material 8A, the first rod member 17, and the second rod member 18. The polymerized denture base material 8A includes an engaging projection 8B corresponding to the groove 55A formed in the second step 55 of the cutting target mold 40. The engaging projection 8B is located below the second rod member 18.

Thereafter, in first fabrication step S70, a portion of the polymerized denture base material 8A in the cutting target 5 is cut off with the cutting machine 60 (see FIG. 15), thereby forming a rod member-including denture base 20A (see FIG. 10) including the first rod member 17 and the second rod member 18.

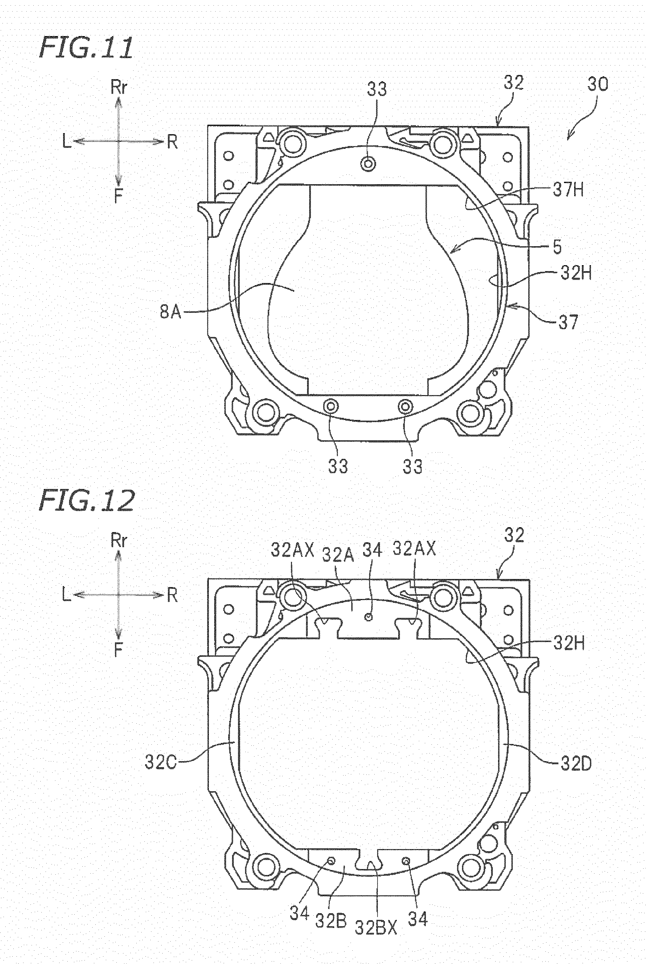

As illustrated in FIG. 11, in this embodiment, the cutting target 5 is cut with the cutting machine 60 while being attached to an adaptor 30. The adaptor 30 includes a body 32 and a holding plate 37. As illustrated in FIG. 12, the body 32 includes a first portion 32A in which the first rod member 17 of the cutting target 5 is fitted, a second portion 32B in which the second rod member 18 of the cutting target 5 is fitted, a third portion 32C connecting the left end of the first portion 32A and the left end of the second portion 32B to each other, and a fourth portion 32D connecting the right end of the first portion 32A and the right end of the second portion 32B to each other. The body 32 holds the cutting target 5. The first portion 32A and the second portion 32B are located below the third portion 32C and the fourth portion 32D. An opening 32H is formed inside the first portion 32A through the fourth portion 32D. The cutting target 5 is disposed in the opening 32H. The first portion 32A includes two recesses 32AX that are recessed to the direction away from the second portion 32B. The first portion 32A includes a screw hole 34 into which a screw 33 (see FIG. 11) that fastens the holding plate 37 and the body 32 together is inserted. The second portion 32B includes a recess 32BX that is recessed to the direction away from the first portion 32A. The engaging projection 8B (see FIG. 9) of the cutting target 5 is fitted in the recess 32BX. The recess 32BX has a shape in conformity with the groove 55A of the cutting target mold 40. The second portion 32A includes two screw holes 34 into which screws 33 (see FIG. 11) that fasten the holding plate 37 and the body 32 together are inserted. The adaptor 30 can be included in the denture base fabricating kit.

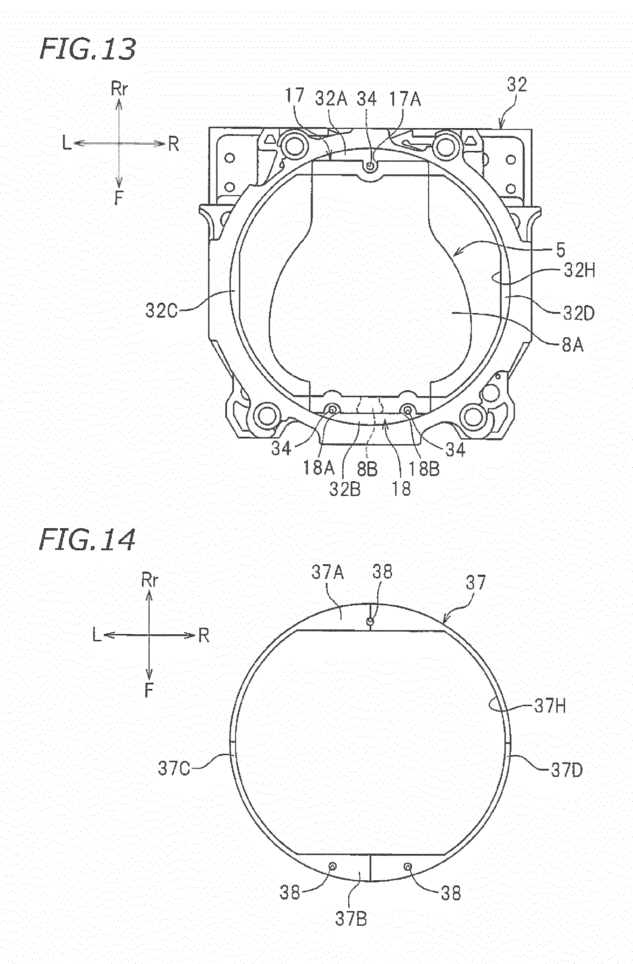

As illustrated in FIG. 13, when the cutting target 5 is held by the body 32, the first rod member 17 of the cutting target 5 and the screw hole 34 of the first portion 32A of the body 32 do not overlap each other in plan view. Specifically, in plan view, the screw hole 34 is disposed inside the first recess 17A of the first rod member 17. When the cutting target 5 is held by the body 32, the second rod member 18 of the cutting target 5 and the two screw holes 34 of the second portion 32B of the body 32 do not overlap each other in plan view. Specifically, in plan view, the screw holes 34 are disposed in the second recess 18A and the third recess 18B of the second rod member 18.

As illustrated in FIG. 14, the holding plate 37 is formed to have a disc shape having an opening 37H therein. The holding plate 37 is detachably attached to the body 32. When the holding plate 37 is attached to the body 32, the holding plate 37 overlaps the first rod member 17 and the second rod member 18 in plan view. The holding plate 37 presses the first rod member 17 and the second rod member 18. The cutting target 5 is disposed in the opening 37H. The holding plate 37 includes a first portion 37A that presses the first rod member 17, a second portion 37B that presses the second rod member 18, a third portion 37C that faces the third portion 32C of the body 32, and a fourth portion 37D that faces the fourth portion 32D of the body 32. The first portion 37A and the second portion 37B have screw holes 38 into which screws 33 (see FIG. 11) that fasten the holding plate 37 and the body 32 together are inserted.

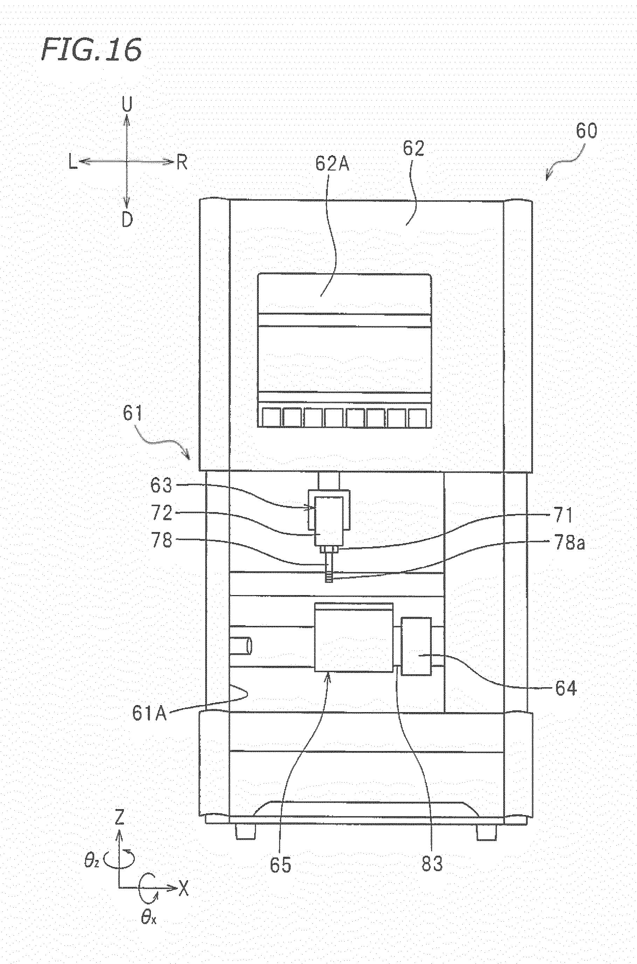

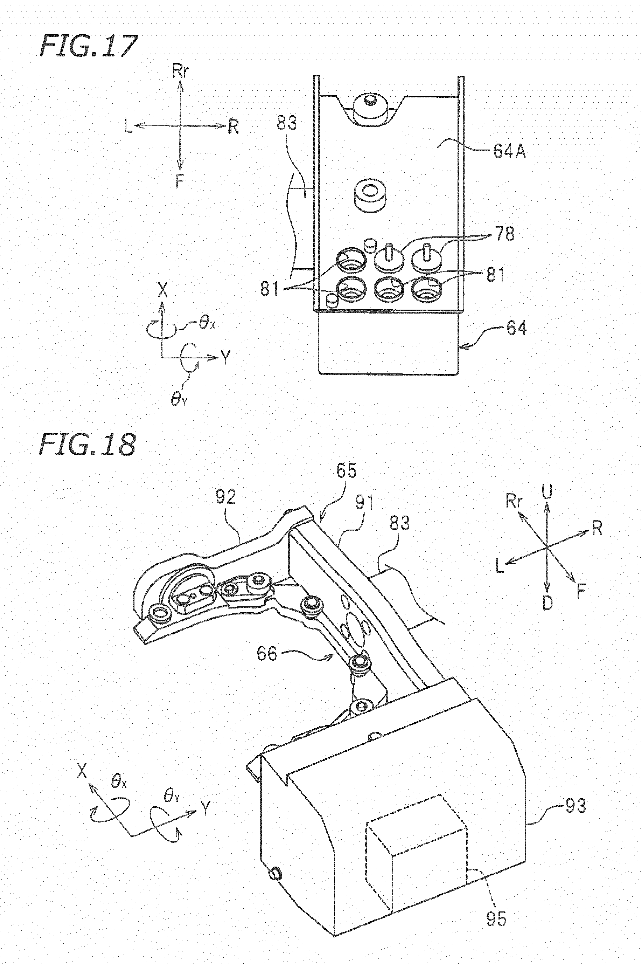

Next, the cutting machine 60 used in first fabrication step S70 will be described. FIG. 15 is a perspective view of the cutting machine 60. FIG. 16 is a front view of the cutting machine 60 and illustrates a state where a cover 62 is open. FIG. 17 is a perspective view of a tool magazine 64. FIG. 18 is a perspective view of a rotation supporting member 65 and a clamp 66. In the following description of the cutting machine 60, left and right respectively refer to left and right seen from an operator (dental technician) at the front of the cutting machine 60. A direction from the cutting machine 60 toward the operator refers to forward, and a direction away from the operator refers to rearward. The cutting machine 60 is placed on a plane constituted by an X axis and a Y axis, where the X axis, the Y axis, and a Z axis orthogonally intersect with one another. The X axis is an axis extending in the left-right direction. The Y axis is an axis extending in the front-rear direction. The Z axis is an axis extending in the top-bottom direction. Characters θx, θy, and θz refer to rotation directions about the X axis, the Y axis, and the Z axis, respectively. It should be noted that these directions are defined simply for convenience of description, and do not limit the state of installation of the cutting machine 60.

As illustrated in FIG. 15, the cutting machine 60 includes a case body 61, a cover 62, a spindle 63 (see FIG. 16), a tool magazine 64 (see FIG. 17), a rotation supporting member 65 (see FIG. 18), and a clamp 66 (see FIG. 18). The case body 61 has a box shape, and includes space 61A (see FIG. 16) therein. The case body 61 is open at the front. As illustrated in FIG. 16, the cover 62 is configured to be freely opened and closed by moving in the top-bottom direction along the front end of the case body 61. The upward movement of the cover 62 allows the inside and outside of the case body 61 to be continuous. The cover 62 includes a window 62A. The operator can visually recognize the inner space 61A through the window 62A.

The spindle 63 is a device used for cutting the cutting target 5 by using a machining tool 78 and rotating the machining tool 78. The spindle 63 includes a tool holder 71 and a rotary part 72. The tool holder 71 holds the upper end of the machining tool 78. The rotary part 72 is disposed at the upper end of the tool holder 71.

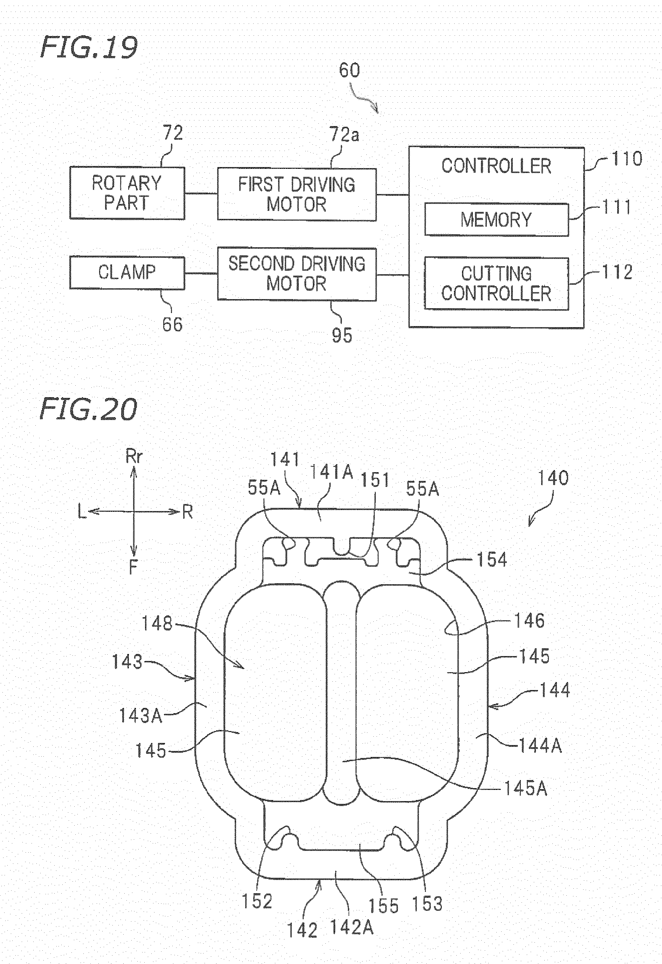

The rotary part 72 is configured to rotate the machining tool 78 held by the tool holder 71. The rotary part 72 extends in the top-bottom direction. Here, a first driving motor 72a (see FIG. 19) is connected to the rotary part 72. The rotary part 72 is configured to rotate about the Z axis θz by driving the first driving motor 72a. With rotation of the rotary part 72, the machining tool 78 held by the tool holder 71 rotates about the Z axis θz. The rotary part 72 is configured to move in the left-right direction and the top-bottom direction by an unillustrated first driving mechanism.

As illustrated in FIG. 17, the tool magazine 64 can house a plurality of machining tools 78. In this embodiment, the tool magazine 64 has a box shape. An upper surface 64A of the tool magazine 64 includes a plurality of holes 81 for housing the machining tools 78. The machining tools 78 are inserted in the holes 81 with upper portions of the machining tools 78 being exposed. In replacing the machining tools 78, one of the machining tools 78 held by the tool holder 71 is returned to the hole 81. Then, the tool holder 71 and the rotary part 72 are moved to a position above the machining tool 78 to be used next, and the tool holder 71 holds the upper end of the machining tool 78 located below the tool holder 71.

As illustrated in FIG. 17, the tool magazine 64 is provided with a first rotary shaft 83 rotatably supporting the rotation supporting member 65. The first rotary shaft 83 extends in the left-right direction, and is coupled to the rotation supporting member 65 (see FIG. 18). The tool magazine 64 is provided with a second driving member (not shown). The first rotary shaft 83 is configured to be rotatable by the second driving member about the X axis θx. With rotation of the first rotary shaft 83 about the X axis θx, the rotation supporting member 65 rotates about the X axis θx.

As illustrated in FIG. 18, the rotation supporting member 65 rotatably supports the clamp 66. The rotation supporting member 65 has a substantially U shape in plan view. The rotation supporting member 65 is coupled to the first rotary shaft 83. The rotation supporting member 65 includes a first portion 91 extending in the front-rear direction, a second portion 92 extending leftward from the rear end of the first portion 91, and a third portion 93 extending leftward from the front end of the first portion 91. The clamp 66 is rotatably supported by the second portion 92 and the third portion 93. The third portion 93 is provided with a second driving motor 95 that rotates the clamp 66 about the Y axis θy.

The clamp 66 is a member that holds the cutting target 5 in cutting the cutting target 5. In this embodiment, the clamp 66 holds the adaptor 30 (see FIG. 11) attached to the cutting target 5 and holds the cutting target 5 interposed therebetween. FIG. 18 does not show the adaptor 30. The clamp 66 has a substantially U shape in plan view. In this embodiment, cutting is performed on the cutting target 5 held by the clamp 66.

A controller 110 will now be described. FIG. 19 is a block diagram of the cutting machine 60. As illustrated in FIG. 19, the cutting machine 60 includes the controller 110. The controller 110 is a device that performs control concerning cutting of the cutting target 5. The controller 110 is constituted by a microcomputer, and is disposed inside the case body 61. Part of the controller 110 may be implemented by a general-purpose computer such as a personal computer. The controller 110 includes a central processing unit (CPU) and a ROM storing, for example, a program to be executed by the CPU, a RAM, and so forth. In this example, the controller 110 performs control concerning cutting of the cutting target 5 by using a program stored in the microcomputer. This program is stored in a recording medium such as a compact disc (CD) or a digital versatile disc (DVD), and can be read out from the recording medium. The program may be downloaded through the Internet.

In this embodiment, the controller 110 is electrically connected to the first driving motor 72a and the second driving motor 95. The controller 110 controls driving of the first driving motor 72a to thereby control rotation of the rotary part 72 of the spindle 63. The controller 110 can control the rotary part 72 so that the rotary part 72 moves in left-right direction and the top-bottom direction. The controller 110 controls driving of the second driving motor 95 to thereby control rotation of the clamp 66 about the Y axis θy. The controller 110 can control the first rotary shaft 83 (see FIG. 18) so that the first rotary shaft 83 rotates about the X axis θx.

In this embodiment, the controller 110 includes a memory 111 and a cutting controller 112. The memory 111 stores, for example, cutting data. The cutting data is so-called NC data. The cutting data is three-dimensional data indicating how the cutting machine 60 fabricates the rod member-including denture base 20A (see FIG. 10). The cutting data is data recording a plurality of processing steps each defining an operation of the spindle 63 and an operation of the clamp 66 holding the cutting target 5 using coordinate values. The cutting data is data created by a computer-aided fabricating device (hereinafter referred to as a CAM device). In this embodiment, the CAM device creates cutting data based on cutting target data that is three-dimensional data on the shape of the denture base 20. The cutting target data refers to STL data of the denture base 20, and is, for example, data created by a computer-aided design device (hereinafter referred to as a CAD device). In this embodiment, the CAM device and the CAD device are communicably connected to the controller 110. Thus, cutting data created by the CAM device is stored in the memory 111 of the controller 110.

The cutting controller 112 controls a cutting process based on cutting data stored in the memory 111. In this embodiment, the cutting controller 112 controls operations of the spindle 63 and the clamp 66 based on coordinate values in the cutting data. A blade 78a of the machining tool 78 (see FIG. 16) that rotates by the spindle 63 is brought into contact with the polymerized denture base material 8A (see FIG. 11) of the cutting target 5 to thereby cut the polymerized denture base material 8A. In this manner, the rod member-including denture base 20A (see FIG. 10) is fabricated. At this time, a plurality of recesses 12 to which the artificial teeth 15 are attached are formed in the denture base 20A. The rod member-including denture base 20A can include a support 19A coupling the denture base 20 and the first rod member 17 to each other (see FIG. 10) and a support 19B coupling the denture base 20 and the second rod member 18 to each other.

Next, in second fabrication step S80, the first rod member 17 and the second rod member 18 are removed from the rod member-including denture base 20A. For example, a dental technician can remove the first rod member 17 and the second rod member 18 from the rod member-including denture base 20A by using a tool such as a cutter with a blade. The removed first rod member 17 and second rod member 18 are discarded later. In the case where the rod member-including denture base 20A includes the support 19A and the support 19B, these supports are removed in second fabrication step S80. In this manner, the steps described above are sequentially performed using the cutting machine 60 and the denture base fabricating kit so that the denture base 20 (see FIG. 2) is fabricated. Thereafter, the artificial teeth 15 are fixed to the recesses 12 of the denture base 20 with an adhesive or the like so that the denture 10 (see FIG. 1) can be fabricated.

In the manner described above, with the fabrication method according to this embodiment, the denture base material injected in the molding space 48 is polymerized with the first rod member 17 and the second rod member 18 attached to the cutting target mold 40. Thus, warpage of the denture base material can be suppressed during the polymerization of the denture base material so that the cutting target 5 can be molded with high quality. In addition, since the polymerized denture base material in the cutting target 5 is cut with the cutting machine 60, a workload on the dental technician can be reduced. The polymerized denture base material has a shape along the molding space 48 of the cutting target mold 40. Thus, the use of the cutting target mold 40 having the molding space 48 in conformity with the denture base 20 to be formed can reduce a redundant material that generated and discarded after cutting, as compared to the case of using a commercially available disc-shaped material. In addition, since a relatively small portion is cut with the cutting machine 60, the time necessary for cutting can be reduced, and furthermore, an undercut portion such as an anterior tooth portion can be easily processed. Furthermore, the denture base material to be polymerized is more reasonable than a commercially available disc-shaped material, and thus, costs for a material for the denture base 20 can be reduced.

With the fabricating method of this embodiment, in the first fabrication step, the cutting target 5 is held by the adaptor 30, and the adaptor 30 holding the cutting target 5 is attached to the cutting machine 60. In attaching the cutting target 5 to the adaptor 30, the first rod member 17 is fitted in the first portion 32A of the body 32, and the second rod member 18 is fitted in the second portion 32B, thereby positioning the cutting target 5 relative to the body 32. Accordingly, positioning of the cutting target 5 relative to the cutting machine 60 can be easily performed.

With the fabricating method according to this embodiment, the first rod member 17 includes the first recess 17A that is engaged with the first projection 51 of the first side wall 41. The second rod member 18 includes the second recess 18A that is engaged with the second projection 52 of the second side wall 42 and the third recess 18B that is engaged with the third projection 53. Accordingly, positioning of the first rod member 17 and the second rod member 18 relative to the cutting target mold 40 can be easily performed. In addition, in injecting the denture base material into the cutting target mold 40 and in polymerizing the denture base material, movement of the first rod member 17 and the second rod member 18 relative to the cutting target mold 40 can be suppressed.

In the fabricating method according to this embodiment, the first recess 17A is formed across the entire first rod member 17 in the top-bottom direction. The second recess 18A and the third recess 18B are formed across the entire second rod member 18 in the top-bottom direction. Accordingly, in pressing the first rod member 17 and the second rod member 18 with the holding plate 37 attached to the body 32, the first recess 17A, the second recess 18A, and the third recess 18B can be used as the screw holes 34 through which the screws 33 for fixing the holding plate 37 ad the body 32 to each other passes.

In the fabricating method according to this embodiment, each of the first rod member 17 and the second rod member 18 is made of a resin material. Accordingly, the denture base material can be more firmly bonded to the first rod member 17 and the second rod member 18.

In the fabricating method according to this embodiment, the cutting target mold 40 is made of a silicone resin. Accordingly, the polymerized polymerized cutting target 5 can be easily taken out of the cutting target mold 40.

In the fabricating method according to this embodiment, in the molding step, the cutting target mold 40 is placed in the polymerizer, and then, water is injected in such a manner that the water level in the polymerizer is below the upper surface of the cutting target mold 40 (e.g., the upper surface 41A of the first side wall 41). This process can further ensure polymerization of the denture base material.

The foregoing description is directed to the preferred embodiment of the present invention. The embodiment described above, however, is merely an example, and the present invention can be performed in various modes.

The cutting target mold 40 according to the embodiment described above is used for fabricating the denture base 20 on an upper jaw, but is not limited to this example. FIG. 20 is a plan view of a cutting target mold 140 for use in fabricating a partial denture base. The cutting target mold 140 can be included in the denture base fabricating kit.

As illustrated in FIG. 20, the cutting target mold 140 includes a bottom wall 145, a first side wall 141, a second side wall 142, a third side wall 143, and a fourth side wall 144. The bottom wall 145 includes a ridge 145A extending upward from the bottom wall 145. The height of the ridge 145A from the bottom wall 145 is lower than the heights of the first through fourth side walls 141 through 144 from the bottom wall 145. The first side wall 141 extends upward from a rear portion of the bottom wall 145. The second side wall 142 extends upward from a front portion of the bottom wall 145. The first side wall 141 and the second side wall 142 face each other. The third side wall 143 extends upward from a left portion of the bottom wall 145. The third side wall 143 connects the left end of the first side wall 141 and the left end of the second side wall 142 to each other. The third side wall 143 is curved to the direction away from the fourth side wall 144. The fourth side wall 144 extends upward from a right portion of the bottom wall 145. The fourth side wall 144 connects the right end of the first side wall 141 and the right end of the second side wall 142 to each other. The fourth side wall 144 is curved to the direction away from the third side wall 143. The third side wall 143 and the fourth side wall 144 face each other. An upper surface 141A of the first side wall 141, an upper surface 142A of the second side wall 142, an upper surface 143A of the third side wall 143, and an upper surface 144A of the fourth side wall 144 are flush with each other. That is, the heights of the upper surfaces 141A through 144A from the bottom wall 145 are the same.

As illustrated in FIG. 20, the cutting target mold 140 includes an opening 146 and molding space 148. The opening 146 is formed at a position facing the bottom wall 145. That is, the cutting target mold 140 is open at the top. The molding space 148 is space surrounded by the bottom wall 145, the first side wall 141, the second side wall 142, the third side wall 143, and the fourth side wall 144. The denture base material described above is injected into the molding space 148.

As illustrated in FIG. 20, the cutting target mold 140 includes a first projection 151, a second projection 152, and a third projection 153. The first projection 151 is formed on the first side wall 141. The first projection 151 projects toward the second side wall 142. The first projection 151 extends in the top-bottom direction. The first projection 151 is formed substantially at the center of the first side wall 141. The second projection 152 and the third projection 153 are formed on the second side wall 142. The second projection 152 and the third projection 153 project toward the first side wall 141. The second projection 152 and the third projection 153 extend in the top-bottom direction. The second projection 152 is formed at the left of the third projection 153. The second projection 152 is located at the left of the first projection 151. The third projection 153 is located at the right of the first projection 151. The first projection 151 is engaged with the first recess 17A of the first rod member 17. The second projection 152 is engaged with the second recess 18A of the second rod member 18. The third projection 153 is engaged with the third recess 18B of the second rod member 18.

As illustrated in FIG. 20, the cutting target mold 140 includes a first step 154 and a second step 155. The first step 154 is formed on the first side wall 141. The first step 154 defines the molding space 148. The first step 154 is located below the upper surface 141A of the first side wall 141. The first step 154 is located above the bottom wall 145. The first step 154 is located above the ridge 145A. The first rod member 17 is disposed on the first step 154. The first step 155 includes two grooves 55A. The grooves 55A are continuous to the molding space 48. In attaching, to the adaptor 30, a cutting target having engaging projections (not shown) with a shape in conformity with the grooves 55A, the engaging projections are respectively fitted in recesses 32AX (see FIG. 12) of the body 32. The second step 155 is formed on the second side wall 142. The second step 155 defines the molding space 148. The second step 155 is located below the upper surface 142A of the second side wall 142. The second step 155 is located above the bottom wall 145. The second step 155 is located above the ridge 145A. The height of the second step 155 from the bottom wall 145 is the same as the height of the first step 154 from the bottom wall 145. The second rod member 18 is disposed on the second step 155.

In the cutting target mold 40 described above, the first side wall 41 includes one first projection 51, but may have two or more projections. In the cutting target mold 40 described above, the second side wall 42 includes two projections (i.e., the second projection 52 and the third projection 53), but may have one or three or more projections.

In the cutting target mold 40 described above, the second step 55 includes the groove 55A, but the invention is not limited to this example. For example, as in the cutting target mold 140, the first step 54 may have two grooves 55A.

## Claims

1. A method for fabricating a denture base (20), the method comprising;
a preparation step (S10) of preparing a cutting target mold (40) including a bottom wall (45), a first side wall (41), a second side wall (42), a third side wall (43), a fourth side wall (44), an opening (46) facing the bottom wall (45), and molding space (48) surrounded by the bottom wall (45), the first side wall (41), the second side wall (42), the third side wall (43), and the fourth side wall (44), the first side wall (41) and the second side wall (42) extending upward from the bottom wall (45) and being opposed to each other, the third side wall (43) and the fourth side wall (44) extending upward from the bottom wall (45), being opposed to each other, and being respectively connected to the first side wall (41) and the second side wall (42);
an attachment step (S20) of attaching a rod-shaped first rod member (17) to a portion of the first side wall (41) defining the molding space (48) in such a manner that an axis of the first rod member (17) extends from the third side wall (43) toward the fourth side wall (44) and the first rod member (17) covers a portion of the opening (46), and attaching a rod-shaped second rod member (18) to a portion of the second side wall (42) defining the molding space (48) in such a manner that an axis of the second rod member (18) extends from the third side wall (43) toward the fourth side wall (44) and the second rod member (18) covers a portion of the opening (46);
an injection step (S30) of injecting a denture base material into the molding space (48); an arrangement step (S40) of disposing a plate member (58) in the cutting target mold (40) in such a manner that the plate member (58) is located above the first rod member (17) and the second rod member (18) and covers a portion of the opening (46);
a molding step (S50) of polymerizing the denture base material and molding a cutting target (5) including the polymerized denture base material, the first rod member (17), and the second rod member (18);
a detachment step (S60) of detaching the cutting target (5) from the cutting target mold (40);
a first fabrication step (S70) of cutting a portion of the polymerized the denture base material in the cutting target (5) with a cutting machine (60) and fabricating a rod member-including denture base (20A) including the first rod member (17) and the second rod member (18); and
a second fabrication step (S80) of removing the first rod member (17) and the second rod member (18) from the rod member-including denture base (20A) and fabricating a denture base (20).

2. The method according to claim 1, wherein in the first fabrication step (S70), the cutting target (5) is attached to an adaptor (30) including a body (32) and a holding plate (37), and the adaptor (30) holding the cutting target (5) is attached to the cutting machine (60), the body (32) including a first portion (32A) in which the first rod member (17) is fitted and a second portion (32B) in which the second rod member (18) is fitted, the body (32) holding the cutting target (5), the holding plate (37) being detachably attached to the body (32), pressing the first rod member (17) and the second rod member (18), and having an opening (37H).

3. The method according to claim 1 or 2, wherein
the first side wall (41) includes a first projection (51) projecting toward the second side wall (42),
the first rod member (17) includes a first recess (17A) that is engaged with the first projection (51),
the second side wall (42) includes a second projection (52) and a third projection (53) that project toward the first side wall (41), and
the second rod member (18) includes a second recess (18A) that is engaged with the second projection (52) and a third recess (18B) that is engaged with the third projection (53).

4. The method according to claim 3, wherein
the first recess (17A) is formed across the entire first rod member (17) in a top-bottom direction, and
the second recess (18A) and the third recess (18B) are formed across the entire second rod member (18) in the top-bottom direction.

5. The method according to any one of claims 1 to 4, wherein each of the first rod member (17) and the second rod member (18) is made of a resin material.

6. The method according to any one of claims 1 to 5, wherein the cutting target mold (40) is made of a silicone resin.

7. The method according to any one of claims 1 to 6, wherein in the molding step (S50), the cutting target mold (40) is placed in a polymerizer, and then water is injected into the polymerizer in such a manner that a water level in the polymerizer is below an upper surface of the cutting target mold (40).

8. A denture base fabricating kit for use in fabricating a denture base (20), the kit comprising:
a cutting target mold (40) including a bottom wall (45), a first side wall (41), a second side wall (42), a third side wall (43), a fourth side wall (44), an opening (46) facing the bottom wall (45), and molding space (48) surrounded by the bottom wall (45), the first side wall (41), the second side wall (42), the third side wall (43), and the fourth side wall (44), a denture base material being injected into the molding space (48), the first side wall (41) and the second side wall (42) extending upward from the bottom wall (45) and being opposed to each other, the third side wall (43) and the fourth side wall (44) extending upward from the bottom wall (45), being opposed to each other, and being respectively connected to the first side wall (41) and the second side wall (42);
a first rod member (17) having a rod shape, being attachable to a portion of the first side wall (41) defining the molding space (48) in such a manner that an axis of the first rod member (17) extends from the third side wall (43) toward the fourth side wall (44) and the first rod member (17) covers a portion of the opening (46);
a second rod member (18) having a rod shape, being attachable to a portion of the second side wall (42) defining the molding space (48) in such a manner that an axis of the second rod member (18) extends from the third side wall (43) toward the fourth side wall (42) and the second rod member (18) covers a portion of the opening (46); and
an adaptor (30) being attachable to a cutting machine (60) and including a body (32) and a holding plate (37), the body (32) including a first portion (32A) in which the first rod member (17) can be fitted and a second portion (32B) in which the second rod member (18) can be fitted, configured to hold a cutting target (5) including the first rod member (17) and the second rod member (18), the holding plate (37) being detachably attachable to the body (32), pressing the first rod member (17) and the second rod member (18) of the cutting target (5), and having an opening (37H).

9. The denture base fabricating kit according to claim 8, further comprising a plate member (58) configured to be disposed in the cutting target mold (40) in such a manner that the plate member (58) is located above the first rod member (17) and the second rod member (18) and covers a portion of the opening (46).

10. The denture base fabricating kit according to claim 8 or 9, wherein
the first side wall (41) includes a first projection (51) projecting toward the second side wall (42),
the first rod member (17) includes a first recess (17A) that is configured to be engaged with the first projection (51),
the second side wall (42) includes a second projection (52) and a third projection (53) that project toward the first side wall (41), and
the second rod member (18) includes a second recess (18A) that is configured to be engaged with the second projection (52) and a third recess (53B) that is configured to be engaged with the third projection (53).

11. The denture base fabricating kit according to any one of claims 8 to 10, wherein
the first recess (17A) is formed across the entire first rod member (17) in a top-bottom direction, and
the second recess (18A) and the third recess (18B) are formed across the entire second rod member (18) in the top-bottom direction.

## Patentansprüche

1. Verfahren zum Herstellen einer Prothesenbasis (20), wobei das Verfahren umfasst:
einen Vorbereitungsschritt (S10) zum Vorbereiten einer Schneidezielform (40) umfassend eine untere Wand (45), eine erste Seitenwand (41), eine zweite Seitenwand (42), eine dritte Seitenwand (43), eine vierte Seitenwand (44), eine zur unteren Wand (45) zeigende Öffnung (48) und von der unteren Wand (45) umgebenen Formraum (48), wobei sich die erste Seitenwand (41), die zweite Seitenwand (42), die dritte Seitenwand (43) und die vierte Seitenwand (44), die erste Seitenwand (41) und die zweite Seitenwand (42) von der unteren Wand (45) nach oben erstrecken und einander gegenüberliegen, wobei sich die dritte Seitenwand (43) und die vierte Seitenwand (44) nach oben von der unteren Wand (45), einander gegenüberliegend und jeweils mit der ersten Seitenwand (41) und der zweiten Seitenwand (42) verbunden, erstrecken,
einen Befestigungsschritt (S20) zum Befestigen eines stabförmigen ersten Stabelements (17) an einem Abschnitt der den Formraum (48) definierenden ersten Seitenwand (41) auf solch eine Weise, dass sich eine Achse des ersten Stabelements (17) von der dritten Seitenwand (43) zur vierten Seitenwand (44) erstreckt und das erste Stabelement (17) einen Teil der Öffnung (46) abdeckt, und Befestigen eines stabförmigen zweiten Stabelements (18) an einem Abschnitt der den Formraum (48) definierenden zweiten Seitenwand (42) auf solch eine Weise, dass sich eine Achse des zweiten Stabelements (18) von der dritten Seitenwand (43) zur vierten Seitenwand (44) erstreckt und das zweite Stabelement (18) einen Teil der Öffnung (46) abdeckt,
einen Einspritzschritt (S30) zum Einspritzen eines Prothesenbasismaterials in den Formraum (48);
einen Anordnungsschritt (S40) zum Anordnen eines Plattenelements (58) in der Schneidezielform (40) auf solch eine Weise, dass das Plattenelement (58) oberhalb vom ersten Stabelement (17) und zweitem Stabelement (18) angeordnet ist und einen Teil der Öffnung (46) abdeckt;
einen Formschritt (S50) zum Polymerisieren des Prothesenbasismaterials und Formen eines Schneideziels (5) umfassend das polymerisierte Prothesenbasismaterial, das erste Stabelement (17) und das zweite Stabelement (18);
einen Abnahmeschritt (S60) zum Abnehmen des Schneideziels (5) von der Schneidezielform (40);
einen ersten Herstellungsschritt (S70) zum Schneiden eines Abschnitts des polymerisierten Prothesenbasismaterials im Schneideziel (5) mit einer Schneidemaschine (60) und Herstellen einer Stabelemente umfassenden Prothesenbasis (20A) umfassend das erste Stabelement (17) und das zweite Stabelement (18); und
einen zweiten Herstellungsschritt (S80) zum Entfernen des ersten Stabelements (17) und des zweiten Stabelements (18) von der Stabelemente umfassenden Prothesenbasis (20A) und Herstellen einer Prothesenbasis (20).

2. Verfahren nach Anspruch 1, wobei im ersten Herstellungsschritt (S70) das Schneideziel (5) an einem Adapter (30) umfassend einen Körper (32) und eine Halteplatte (37) befestigt wird und der das Schneideziel (5) haltende Adapter (30) an der Schneidemaschine (60) befestigt wird, wobei der Körper (32) einen ersten Abschnitt (32A), in dem das erste Stabelement (17) montiert ist, und einen zweiten Abschnitt (32B), in dem das zweite Stabelement (18) montiert ist, umfasst, wobei der Körper (32) das Schneideziel (5) hält, wobei die Halteplatte (37) abnehmbar am Körper (32), das erste Stabelement (17) und das zweite Stabelement (18) pressend, befestigt ist und eine Öffnung (37H) aufweist.

3. Verfahren nach Anspruch 1 oder 2, wobei
die erste Seitenwand (41) einen zur zweiten Seitenwand (42) vorstehenden ersten Vorsprung (51) umfasst,
das erste Stabelement (17) eine erste Aussparung (17A) umfasst, die im Eingriff mit dem ersten Vorsprung (51) ist,
die zweite Seitenwand (42) einen zweiten Vorsprung (52) und einen dritten Vorsprung (53) umfasst, die zur ersten Seitenwand (41) vorstehen, und
das zweite Stabelement (18) eine zweite Aussparung (18A), die im Eingriff mit dem zweiten Vorsprung (52) ist, und eine dritte Aussparung (18B), die im Eingriff mit dem dritten Vorsprung (53) ist, umfasst.

4. Verfahren nach Anspruch 3, wobei
die erste Aussparung (17A) über das gesamte erste Stabelement (17) in einer Richtung von oben nach unten gebildet ist, und
die zweite Aussparung (18A) und die dritte Aussparung (18B) über das gesamte zweite Stabelement (18) in der Richtung von oben nach unten gebildet ist.

5. Verfahren nach einem der Ansprüche 1 bis 4, wobei sowohl das erste Stabelement (17) als auch das zweite Stabelement (18) aus einem Harzmaterial besteht.

6. Verfahren nach einem der Ansprüche 1 bis 5, wobei die Schneidezielform (40) aus einem Silikonharz besteht.

7. Verfahren nach einem der Ansprüche 1 bis 6, wobei im Formschritt (S50) die Schneidezielform (40) in eine Polymerisiermaschine gesetzt wird und anschließend Wasser in die Polymerisiermaschine auf solch eine Weise gespritzt wird, dass sich ein Wasserstand in der Polymerisiermaschine unterhalb einer Oberseite der Schneidezielform (40) befindet.

8. Prothesenbasis-Herstellungssatz zur Verwendung beim Herstellen einer Prothesenbasis (20), wobei der Satz umfasst:
eine Schneidezielform (40) umfassend eine untere Wand (45), eine erste Seitenwand (41), eine zweite Seitenwand (42), eine dritte Seitenwand (43), eine vierte Seitenwand (44), eine zur unteren Wand (45) zeigende Öffnung (46) und von der unteren Wand (45), der ersten Seitenwand (41), der zweiten Seitenwand (42), der dritten Seitenwand (43) und der vierten Seitenwand (44) umgebenen Formraum (48), wobei ein Prothesenbasismaterial in den Formraum (48) gespritzt wird, wobei sich die erste Seitenwand (41) und die zweite Seitenwand (42) von der unteren Wand (45) nach oben erstrecken und einander gegenüberliegen, wobei sich die dritte Seitenwand (43) und die vierte Seitenwand (44) nach oben von der unteren Wand (45), einander gegenüberliegend und jeweils mit der ersten Seitenwand (41) und der zweiten Seitenwand (42) verbunden, erstrecken,
wobei ein erstes Stabelement (17) mit einer Stabform an einem Abschnitt der den Formraum (48) definierenden ersten Seitenwand (41) auf solch eine Weise, dass sich eine Achse des ersten Stabelements (17) von der dritten Seitenwand (43) zur vierten Seitenwand (44) erstreckt und das erste Stabelement (17) einen Teil der Öffnung (46) abdeckt, befestigbar ist;
wobei ein zweites Stabelement (18) mit einer Stabform an einem Abschnitt der den Formraum (48) definierenden zweiten Seitenwand (42) auf solch eine Weise, dass sich eine Achse des zweiten Stabelements (18) von der dritten Seitenwand (43) zur vierten Seitenwand (42) erstreckt und das zweite Stabelement (18) einen Teil der Öffnung (46) abdeckt, befestigbar ist; und
wobei ein Adapter (30) an einer Schneidemaschine (60) befestigbar ist und einen Körper (32) und eine Halteplatte (37) umfasst, wobei der Körper (32) einen ersten Abschnitt (32A), in dem das erste Stabelement (17) montiert werden kann, und einen zweiten Abschnitt (32B), in dem das zweite Stabelement (18) montiert werden kann, umfasst, ausgebildet zum Halten eines Schneideziels (5) umfassend das erste Stabelement (17) und das zweite Stabelement (18), wobei die Halteplatte (37) abnehmbar am Körper (32), das erste Stabelement (17) und das zweite Stabelement (18) des Schneideziels (5) pressend, befestigbar ist und eine Öffnung (37H) aufweist.

9. Prothesenbasis-Herstellungssatz nach Anspruch 8, ferner umfassend ein zum Anordnen in der Schneidezielform (40) auf solch eine Weise ausgebildetes Plattenelement (58), dass das Plattenelement (58) oberhalb vom ersten Stabelement (17) und zweitem Stabelement (18) angeordnet ist und einen Teil der Öffnung (46) abdeckt.

10. Prothesenbasis-Herstellungssatz nach Anspruch 8 oder 9, wobei
die erste Seitenwand (41) einen zur zweiten Seitenwand (42) vorstehenden ersten Vorsprung (51) umfasst,
das erste Stabelement (17) eine erste Aussparung (17A) umfasst, die zum Eingriff mit dem ersten Vorsprung (51) ausgebildet ist,
die zweite Seitenwand (42) einen zweiten Vorsprung (52) und einen dritten Vorsprung (53) umfasst, die zur ersten Seitenwand (41) vorstehen, und
das zweite Stabelement (18) eine zweite Aussparung (18A), die zum Eingriff mit dem zweiten Vorsprung (52) ausgebildet ist, und eine dritte Aussparung (53B), die zum Eingriff mit dem dritten Vorsprung (53) ausgebildet ist, umfasst.

11. Prothesenbasis-Herstellungssatz nach einem der Ansprüche 8 bis 10, wobei
die erste Aussparung (17A) über das gesamte erste Stabelement (17) in einer Richtung von oben nach unten gebildet ist, und
die zweite Aussparung (18A) und die dritte Aussparung (18B) über das gesamte zweite Stabelement (18) in der Richtung von oben nach unten gebildet ist.

## Revendications

1. Procédé de fabrication d'une base de dentition (20), le procédé comprenant :
une étape de préparation (S10) pour la préparation d'un moule cible de coupe (40) comprenant une paroi de fond (45), une première paroi latérale (41), une seconde paroi latérale (42), une troisième paroi latérale (43), une quatrième paroi latérale (44), une ouverture (46) faisant face à la paroi de fond (45), et l'espace de moulage (48) entouré par la paroi de fond (45), la première paroi latérale (41), la seconde paroi latérale (42), la troisième paroi latérale (43), et la quatrième paroi latérale (44), la première paroi latérale (41) et la seconde paroi latérale (42) s'étendant vers le haut depuis la paroi de fond (45) et étant opposées l'une à l'autre, la troisième paroi latérale (43) et la quatrième paroi latérale (44) s'étendant vers le haut depuis la paroi de fond (45), étant opposées l'une à l'autre, et étant respectivement reliées à la première paroi latérale (41) et la seconde paroi latérale (42) ;
une étape de fixation (S20) pour la fixation d'un premier élément tige (17) en forme de tige à une partie de la première paroi latérale (41) définissant l'espace de moulage (48) d'une manière telle qu'un axe du premier élément tige (17) s'étend depuis la troisième paroi latérale (43) vers la quatrième paroi latérale (44) et le premier élément tige (17) recouvre une partie de l'ouverture (46), et fixe un second élément tige (18) en forme de tige à une partie de la seconde paroi latérale (42) définissant l'espace de moulage (48) d'une manière telle qu'un axe du second élément tige (18) s'étend depuis la troisième paroi latérale (43) vers la quatrième paroi latérale (44) et le second élément tige (18) recouvre une partie de l'ouverture (46) ;
une étape d'injection (S30) pour l'injection d'un matériau de base de dentition dans l'espace de moulage (48) ;
une étape de configuration (S40) pour la mise en place d'un élément plaque (58) dans le moule cible de coupe (40) d'une manière telle que l'élément plaque (58) est localisé au-dessus du premier élément tige (17) et du second élément tige (18) et recouvre une partie de l'ouverture (46) ;
une étape de moulage (S50) pour la polymérisation du matériau de base de dentition et le moulage d'une cible de coupe (5) comprenant le matériau de base de dentition polymérisé, le premier élément tige (17), et le second élément tige (18) ;
une étape de détachement (S60) afin de détacher la cible de coupe (5) du moule cible de coupe (40) ;
une première étape de fabrication (S70) destinée à couper une partie du matériau de base de dentition polymérisé dans la cible de coupe (5) avec une machine de coupe (60) et la fabrication d'une base de dentition comprenant un élément tige (20A) comprenant le premier élément tige (17) et le second élément tige (18) ; et
une seconde étape de fabrication (S80) afin de retirer le premier élément tige (17) et le second élément tige (18) de la base de dentition comprenant un élément tige (20A) et de fabriquer une base de dentition (20).

2. Procédé selon la revendication 1 dans lequel dans la première étape de fabrication (S70), la cible de coupe (5) est fixée à un adaptateur (30) comprenant un corps (32) et une plaque de maintien (37), et l'adaptateur (30) maintenant la cible de coupe (5) est fixé à la machine de coupe (60), le corps (32) comprenant une première partie (32A) dans laquelle le premier élément tige (17) est ajusté et une seconde partie (32B) dans laquelle le second élément tige (18) est ajusté, le corps (32) maintenant la cible de coupe (5), la plaque de maintien (37) étant fixée de manière à pouvoir être détachée au corps (32), comprimant le premier élément tige (17) et le second élément tige (18), et ayant une ouverture (37H).

3. Procédé selon la revendication 1 ou 2, dans lequel
la première paroi latérale (41) comprend une première projection (51) se projetant vers la seconde paroi latérale (42),
le premier élément tige (17) comprend un premier renfoncement (17A) qui est engagé avec la première projection (51),
la seconde paroi latérale (42) comprend une seconde projection (52) et une troisième projection (53) qui se projettent vers la première paroi latérale (41), et
le second élément tige (18) comprend un second renfoncement (18A) qui est engagé avec la seconde projection (52) et un troisième renfoncement (18B) qui est engagé avec la troisième projection (53).

4. Procédé selon la revendication 3, dans lequel
le premier renfoncement (17A) est formé à travers le premier élément tige (17) entier dans un sens haut-bas, et
le second renfoncement (18A) et le troisième renfoncement (18B) sont formés à travers le second élément tige (18) entier dans le sens haut-bas.

5. Procédé selon l'une quelconque des revendications 1 à 4, dans lequel chacun du premier élément tige (17) et du second élément tige (18) est constitué d'un matériau de résine.

6. Procédé selon l'une quelconque des revendications 1 à 5, dans lequel le moule cible de coupe (40) est constitué d'une résine de silicone.

7. Procédé selon l'une quelconque des revendications 1 à 6, dans lequel dans l'étape de moulage (S50), le moule cible de coupe (40) est placé dans un appareil de polymérisation, et ensuite de l'eau est injectée dans l'appareil de polymérisation d'une manière telle qu'un niveau d'eau dans l'appareil de polymérisation se trouve en-dessous d'une surface supérieure du moule cible de coupe (40).

8. Kit de fabrication d'une base de dentition pour l'utilisation dans la fabrication d'une base de dentition (20), le kit comprenant :
un moule cible de coupe (40) comprenant une paroi de fond (45), une première paroi latérale (41), une seconde paroi latérale (42), une troisième paroi latérale (43), une quatrième paroi latérale (44), une ouverture (46) faisant face à la paroi de fond (45), et l'espace de moulage (48) entouré par la paroi de fond (45), la première paroi latérale (41), la seconde paroi latérale (42), la troisième paroi latérale (43), et la quatrième paroi latérale (44), un matériau de base de dentition étant injecté dans l'espace de moulage (48), la première paroi latérale (41) et la seconde paroi latérale (42) s'étendant vers le haut depuis la paroi de fond (45) et étant opposées l'une à l'autre, la troisième paroi latérale (43) et la quatrième paroi latérale (44) s'étendant vers le haut depuis la paroi de fond (45), étant opposées l'une à l'autre, et étant respectivement reliées à la première paroi latérale (41) et la seconde paroi latérale (42) ;
un premier élément tige (17) ayant une forme de tige, pouvant être fixé à une partie de la première paroi latérale (41) définissant l'espace de moulage (48) d'une manière telle qu'un axe du premier élément tige (17) s'étend depuis la troisième paroi latérale (43) vers la quatrième paroi latérale (44) et le premier élément tige (17) recouvre une partie de l'ouverture (46) ;
un second élément tige (18) ayant une forme de tige, pouvant être fixé à une partie de la seconde paroi latérale (42) définissant l'espace de moulage (48) d'une manière telle qu'un axe du second élément tige (18) s'étend depuis la troisième paroi latérale (43) vers la quatrième paroi latérale (42) et le second élément tige (18) recouvre une partie de l'ouverture (46) ; et
un adaptateur (30) pouvant être fixé à une machine de coupe (60) et comprenant un corps (32) et une plaque de maintien (37), le corps (32) comprenant une première partie (32A) dans laquelle le premier élément tige (17) peut être ajusté et une seconde partie (32B) dans laquelle le second élément tige (18) peut être ajusté, configuré pour maintenir une cible de coupe (5) comprenant le premier élément tige (17) et le second élément tige (18), la plaque de maintien (37) étant fixée de manière à pouvoir être détachée au corps (32), comprimant le premier élément tige (17) et le second élément tige (18) de la cible de coupe (5), et ayant une ouverture (37H).

9. Kit de fabrication d'une base de dentition selon la revendication 8, comprenant en outre un élément plaque (58) configuré pour être disposé dans le moule cible de coupe (40) d'une manière telle que l'élément plaque (58) est localisé au-dessus du premier élément tige (17) et du second élément tige (18) et recouvre une partie de l'ouverture (46).

10. Kit de fabrication d'une base de dentition selon la revendication 8 ou 9, dans lequel
la première paroi latérale (41) comprend une première projection (51) se projetant vers la seconde paroi latérale (42),
le premier élément tige (17) comprend un premier renfoncement (17A) qui est configuré pour être engagé avec la première projection (51),
la seconde paroi latérale (42) comprend une seconde projection (52) et une troisième projection (53) qui se projettent vers la première paroi latérale (41), et
le second élément tige (18) comprend un second renfoncement (18A) qui est configuré pour être engagé avec la seconde projection (52) et un troisième renfoncement (53B) qui est configuré pour être engagé avec la troisième projection (53).

11. Kit de fabrication d'une base de dentition selon l'une quelconque des revendications 8 à 10, dans lequel
le premier renfoncement (17A) est formé à travers le premier élément tige (17) entier dans un sens haut-bas, et
le second renfoncement (18A) et le troisième renfoncement (18B) sont formés à travers le second élément tige (18) entier dans le sens haut-bas.
